# EUROPEAN PATENT APPLICATION

(11) **EP 3 560 337 A1**
(43) Date of publication of application: **30.10.2019**
(21) Application number: 17871672.6
(22) Date of filing: 17.11.2017
(51) Int. Cl.: A21B 3/00, A21B 3/13, A21B 3/15, F24C 15/00, F24C 15/16

(54) **CONTAINER DEVICE FOR PAPER AND/OR CARDBOARD MOULDS, FOR USE IN A BAKING PROCESS, FORMED BY INTERSECTING BARS FORMING A RACK COMPRISING CAVITIES FOR THE MOULDS**

(30) Priority: 17.11.2016 CL 20162938
(71) Applicant: Alarcón Rojas, Hugo Armando, 9750657 Peñaflor, Santiago (CL)
(72) Inventor: Alarcón Rojas, Hugo Armando, 9750657 Peñaflor, Santiago (CL)
(74) Representative: Ungria López, Javier
(86) International application number: PCT/CL2017/000035
(87) International publication number: WO 2018/090153

(57) **Abstract**

The invention relates to a container device for paper and / or cardboard moulds for use in a baking process in the food industry. Specifically, the invention relates to a device that supports and contains paper and / or cardboard moulds, before, during and after a baking process carried out on food production lines.

After being used for baking, the aforementioned paper and / or cardboard moulds, are then used as packaging during the transport, storage and sale of the product, providing a guarantee of protection and reducing the handling of the product during its production process.

## Description

The invention relates to a container device for paper and/or cardboard moulds, for use in a baking process in the food industry. Specifically, the invention relates to a device that supports and contains paper and/or cardboard moulds before, during and after the baking process carried out on food production lines.

These paper and/or cardboard moulds, after being used for baking, are the container for transport, storage and sale of the product, giving a guarantee of protection and reducing the handling of the product during its production process.

### STATE OF THE ART

Nowadays, in the process of baking doughs and pastries, sweet and salty, such as cakes, tarts, küchen, bread, empanadas, pizzas, etc., paper, cardboard, metal or silicon containers are used. In the process, the mixture is poured into the containers, which are then taken to the oven and, generally, are placed on metal trays that used by the industrial ovens for the amount of time required for their cooking, to finally be removed from the oven and packaged in the corresponding formats.

To start with the baking process, the reusable metal moulds are usually applied a mould release agent, which will facilitate the removal of the entire product from the mould after the cooking process. In the case of cardboard moulds, it is not necessary to apply any mould release agent, since the products are sold in the same cardboard moulds. Then, the mixture for doughs and pastries is poured into the containers.

Subsequently, it proceeds with the entry of the moulds into the oven. For this, it should be considered that two different types of industrial ovens are used: batch and continuous. In the case that baking process is done in batch ovens, the moulds with the mixture in their interior must be placed on a metal tray, which is located in a cart next to other trays and, it is the cart that enters the oven. For the cases in which continuous ovens are used, the moulds with the mixture are located in the belt that will transport them through the oven for the baking process.

The main drawback lies in the efficiency of the process, when moving the moulds with the mixtures in and out of the ovens and using reusable metal moulds, the weight that can be carried by operators limits the number of moulds containing mixture that can be moved simultaneously.

Other drawbacks lie in the additional processes that must be carried out when using reusable metal moulds, since they must be subjected to a washing process so they are able to be used again and to maintenance processes, so they do not lose their shape.

One drawback that is relevant when using disposable and reusable metal moulds lies in the additional cleaning process to which the oven trays must be subjected. When handling the moulds with the mixture, generally spills of the content on the trays occur, accumulating mixture in the trays of the ovens. Therefore, at the end of the baking process, each of the trays must be removed and cleaned.

The aforementioned methods, which are currently used, have drawbacks regarding their costs. The alternative of using paper moulds with a rack adapted to them which gives them the necessary containment turns out to be competitive since the paper moulds have a lower cost compared to the reusable metal moulds and the disposable metal moulds. In addition, there are drawbacks in terms of energy. Currently, in batch industrial ovens, metal trays (made of metal sheet) are used, which are subjected to the process and must increase their temperature considerably in order to achieve an adequate cooking temperature inside the oven.

In addition, the metal trays (made of metal sheet), make it difficult for the heat flow to circulate inside the oven, which affects the uniformity of the cooking process and the baked goods.

This is how the need to use a container device for paper and/or cardboard moulds to be used during the baking process in the Food Industry is manifested. This device has not been described in the literature and it is not available for purchase.

The solution proposed in the present application is based on the objective of increasing the efficiency in the baking process of doughs and pastries in the Food Industry through the use of a device that solves the problem of the weight that operators must carry when moving the moulds inside the ovens, it simplifies the process by allowing the use of cardboard moulds, which allow the commercialization of doughs and pastries as they can be used as final packaging and, allows energy savings by reducing the surface of the trays of the ovens that must be heated in the process. In addition, it allows a more uniform cooking process by increasing the flow of heat through the lattice of the device.

The device consists of a metal rack whose arrangement allows the containment of paper and/or cardboard moulds for its use before, during and after the baking process in industrial ovens (batch and continuous). This rack is designed to give support and containment to the paper and/or cardboard moulds that carry the food mixture that is going to be baked.

The advantages presented by the device lie in the fact that, in contrast to the metal trays (made of metal sheet) that the batch ovens which have a continuous surface have, the device has a lattice surface that allows the circulation of hot air around the moulds, which decreases the energy and time needed for the baking process, and improves uniformity in the baking process.

At the same time, the device has the advantage of allowing more efficient handling by the operators, since it allows the simultaneous transfer of a greater number of paper and / or cardboard moulds in its interior, which is not possible to achieve with the traditional trays for its higher weight and, by providing containment and support to the moulds, the problem of spillage of the contents and the overturning of the moulds inside the ovens is considerably reduced, facilitating the cleaning of the ovens.

The device can be used both in batch and continuous ovens, because it has tabs that allow it to adjust to the rails of batch ovens and also, because of its design, it can stand by itself to be used in continuous ovens.

The device allows the use of paper and/or cardboard containers made of thinner materials, as it provides them with the necessary support, they do not necessarily require to be self-supporting and, at the same time, the moulds can have simpler designs and, therefore, be cheaper.

### BRIEF DESCRIPTION OF THE FIGURES

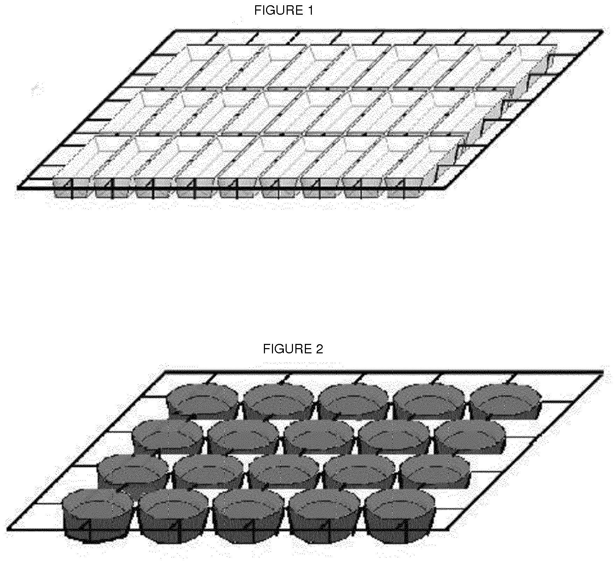

Figure 1: represents a view of the arrangement of the rectangular paper and/or cardboard moulds on the device of the present application, prepared to receive the mixture to be baked.
Figure 2: represents a view of the arrangement of the round moulds of paper and/or cardboard on the device of the present application, prepared to receive the mixture to be baked.

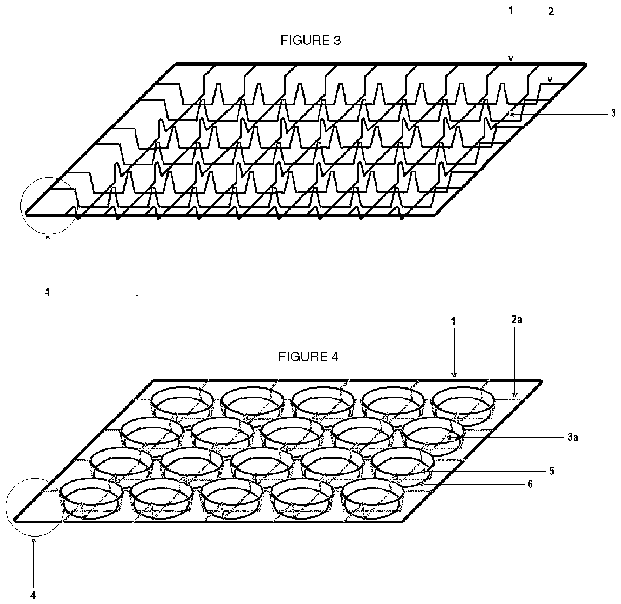

Figure 3: represents a view of the device of the present application, without the rectangular moulds of paper and/or cardboard.
Figure 4: represents a view of the device of the present application, without the round moulds of paper and/or cardboard.

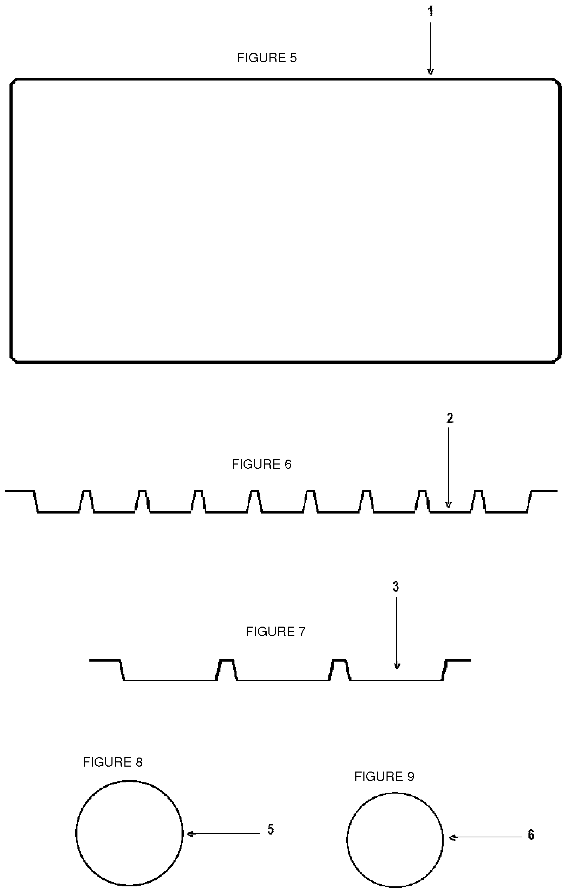

Figure 5: represents a view of the peripheral metal frame of the device of the present application.
Figure 6: represents a side view of the folded longitudinal metal which is part of the lattice of the device of the present application.
Figure 7: represents a side view of the folded transversal metal which is part of the lattice of the device of the present application.
Figure 8: represents a view of the upper metal ring.
Figure 9: represents a view of the lower metal ring.

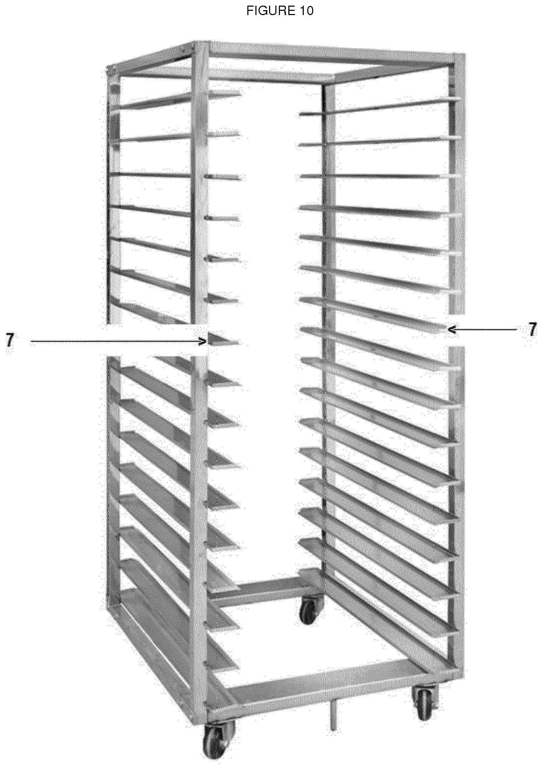

Figure 10: represents a view of the carts that are used in batch ovens. The tabs of the device of the present application slide on the rails of the cart.

### DETAILED DESCRIPTION OF THE INVENTION

The device for baking doughs and pastries in industrial ovens, consists of a metal rack composed of a rectangular metal frame (1), longitudinal bars (2) and transversal bars (3), which are bent inside, crossed and welded to each other to form a lattice that allows it to contain and support the paper and/or cardboard moulds that carry the mixture that is to be baked.

The metal frame (1) is larger in diameter than the longitudinal and transversal bars inside it. The longitudinal bars (2) and the transversal bars (3) are welded over the frame, forming a tab (4) on its four sides, which supports the entire weight of the device plus the dough to be baked when it is mounted and slipped on the rails of the carts (7) that are used by batch ovens.

The longitudinal bars (2) and the transversal bars (3) have an arrangement that gives rise to concavities. These concavities give containment to the mould, which prevents its deformation when having the mixture in its interior and allows its easy placement and removal from the device. In addition, the concavities facilitate the storage of the device by allowing the racks to be stacked one inside the other (by stacking them).

To bake with round containers of paper and/or cardboard, the longitudinal bars (2a) and the transversal bars (3a), which in their arrangement form a concavity, are welded to the frame (1). The lower metal ring (6) and the upper metal ring (5) are also welded to contain the round paper and/or cardboard moulds. These concavities give containment to the mould, which prevents its deformation when having the mixture in its interior and allows its easy placement and removal from the device. In addition, the concavities facilitate the storage of the device by allowing the racks to be stacked one inside the other (by stacking them).

## Claims

1. Container device for paper and / or cardboard moulds to be used during the baking process in the food industry, CHARACTERIZED because it comprises a rectangular metal frame (1), longitudinal bars (2) and transversal bars (3), which are bent and crossed inside with each other to form a lattice.

2. Device according to claim 1, CHARACTERIZED because of the metal frame (1) has support tabs on its four sides (4).

3. Device according to claim 1, CHARACTERIZED because of the longitudinal bars (2) and transversal bars (3), entwined form concavities for stacking.
